# EUROPEAN PATENT APPLICATION

(11) **EP 1 662 486 A1**
(43) Date of publication of application: **31.05.2006**
(21) Application number: 04405738.8
(22) Date of filing: 29.11.2004
(51) Int. Cl.: G11B 5/02, G11B 19/12, G11B 20/00

(54) **Process for storing information in a magnetic multi-layer device**

(71) Applicant: EMPA Eidgenössische Materialprüfungs- und Forschungsanstalt, CH-8600 Dübendorf (CH)
(72) Inventor: Hug, Hans J.,Prof. Dr. c/o EMPA Eidgenössische, Überlandstr. 129, 8600 Dübendorf (CH); Kappenberger, Peter, Dr. c/o EMPA Eidgenössische, Überlandstr. 129, 8600 Dübendorf (CH)
(74) Representative: Heinen, Detlef

(57) **Abstract**

In a process for storing information in a magnetic multi-layer storage device (1), the device comprises at least one ferromagnetic transfer layer (TL) and at least one anti-ferromagnetic storage layer (SL). Information that has been written into ferromagnetic transfer layer (TL) is transferred into anti-ferromagnetic storage layer (SL) by heating of the anti-ferromagnetic storage layer (SL) to a temperature higher than its Néel-temperature but lower than the Curie-temperature of the ferromagnetic transfer layer (TL). Thus, information is transferred from the ferromagnetic transfer layer (TL) into the anti-ferromagnetic storage layer (SL). Subsequently, the temperature of the anti-ferromagnetic storage layer (SL) is lowered below its Néel-temperature in order to permanently store the information in the anti-ferromagnetic storage layer (SL). The information from the ferromagnetic transfer layer (TL) is then deleted.

## Description

The invention is related to a process for storing information in a magnetic multi-layer device, further in a related reading process, still further in a related process for changing or deleting information, and finally in a related magnetic multi-layer storage device.

In various kinds of cards, e.g. bank cards, credit/debit cards, access cards, as well as in magnetic tapes or magnetic strips, or in magnetic hard disk drives, sensitive data is stored in encrypted or non-encrypted form. For example in cards, the data is typically stored in a magnetic strip embedded in the card. The magnetic strip comprises at least one magnetic layer. In order to store data, a writing device is used which is controlled so as to generate a magnetic field that in turn generates a corresponding magnetization pattern in the ferromagnetic layer of the magnetic strip. The magnetization pattern creates a magnetic stray field in the vicinity of the magnetic layer. This stray field is detectable and thus corresponding data can be retrieved using a suitable reading device.

However, the data stored in these magnetic layers are prone to be changed or erased by unintentional exposure to magnetic fields, e.g. of coils or permanent magnets, or in some instances they can be erased or changed simply by stacking different cards with the magnetic strips of these cards facing each other.

In addition, unauthorized reading of the data can be performed comparatively easily with the aid of a commercially available reading device or with the aid of a reading device that can be easily constructed. Also, an unauthorized change of the stored data is comparatively easy to perform. Finally, the data may get lost due to aging and/or demagnetization of the material[s] used.

In DE-A-198 52 368 a magnetic storage device is suggested comprising two ferromagnetic layers - a base layer and a code layer - which are separated by an intermediate layer. The material and thickness of the intermediate layer is specifically selected such that it allows an antiferromagnetic coupling of the two ferromagnetic layers, i.e. at locations where an intermediate layer is present, the direction of magnetization of the code layer is opposite to the direction of magnetization of the base layer, while at locations where no intermediate layer is present the direction of magnetization of the base layer and the code layer is identical. Accordingly, information can be stored in the code layer by providing an intermediate layer of a suitable thickness at dedicated locations so that the code layer can be magnetized at these dedicated locations in a direction opposite to the direction of magnetization of the base layer. A suitable reading device then detects, that the net magnetic field at these dedicated locations is considerably smaller than the net magnetic field at locations where no intermediate layer is present.

Upon unintentional exposure of the storage device containing this information to an external magnetic field that drives the code layer into saturation, the ferromagnetic code layer is temporarily uniformly magnetized, so that temporarily no information is contained in the code layer. However, as the external magnetic field has disappeared the original state of the code layer recurs so that the information in the code layer is not being lost despite the temporal exposure to a large external magnetic field.

However, although such device represents a step forward with respect to unintentional exposure to large external magnetic fields, the device still suffers from certain drawbacks. The information can be stored in the code layer by providing an intermediate layer at dedicated locations and with a predefined thickness. Accordingly, the locations where an intermediate layer should be arranged can only be determined once, namely at the time of fabrication. This results at least in the following consequences:
- Every single information pattern has a unique pattern of locations where an intermediate layer is arranged, meaning an increased expense during manufacturing
- The information stored once cannot be changed or deleted
- The information is still contained in the ferromagnetic code layer; thus the information can be easily read without authorization and may also be copied by unauthorized persons.
   According to the instant invention, a new method for storing information is suggested that overcomes the aforementioned drawbacks. This method for storing is characterized by the features of independent claim 1. Additional variants of the process are the subject of dependent claims 2 to 12.
   In particular, in the process for storing information in a magnetic multi-layer storage device according to the instant invention the storage device is a magnetic multi-layer storage device comprising at least one ferromagnetic transfer layer and at least one anti-ferromagnetic storage layer. Information to be stored has been written into the ferromagnetic transfer layer, and is transferred into the anti-ferromagnetic storage layer and/or into its interface to the ferromagnetic transfer layer by heating of the at least one anti-ferromagnetic storage layer (and this may include its interface to the ferromagnetic transfer layer, but will be referred to hereinafter as heating of the anti-ferromagnetic transfer layer) to a temperature higher than its Néel-temperature but lower than the Curie-temperature of the at least one ferromagnetic transfer layer in order to transfer the information from the ferromagnetic transfer layer into the anti-ferromagnetic storage layer and/or into its interface to the ferromagnetic transfer layer. Subsequently, the temperature of the anti-ferromagnetic storage layer (and this may include its interface to the ferromagnetic transfer layer, but will be referred to hereinafter only as the anti-ferromagnetic storage layer) is lowered below its Néel-temperature in order to permanently store the information in the anti-ferromagnetic storage layer and/or at its interface to the ferromagnetic transfer layer. Then, the information from the ferromagnetic transfer layer is deleted.
   Accordingly, after the information has been stored in the anti-ferromagnetic layer and/or in its interface to the ferromagnetic transfer layer, it can neither be changed or deleted unintentionally by exposure to external magnetic fields, even if these fields have a field strength much larger than the saturation field strength of the ferromagnetic transfer layer. Secondly, because the information is deleted from the ferromagnetic transfer layer after it has been stored in the anti-ferromagnetic storage layer and/or into its interface to the ferromagnetic transfer layer, the information cannot be read or detected by a conventional device or by a device that can be easily constructed. Unauthorized reading as well as unauthorized copying of the information are not easily possible, accordingly. Nevertheless, it is possible to read the information with a specific process according to the invention, which will be explained further below. Also, with a specific process according to the invention, it is generally possible to change or delete the information from the anti-ferromagnetic storage layer and/or from its interface to the ferromagnetic transfer layer, if this is desired. This process will also be explained later.
   In a variant of the storing process according to the invention, the step of deleting of the information from the ferromagnetic transfer layer comprises applying a magnetic field to the ferromagnetic transfer layer that drives the ferromagnetic transfer layer into saturation. After the ferromagnetic layer has been driven into saturation, there is no more information contained in the ferromagnetic layer.
   In a further variant of the storing process, first the information is written into the ferromagnetic transfer layer, and only then the at least one anti-ferromagnetic storage layer is heated to a temperature higher than its Néel-temperature in order to transfer the information into the anti-ferromagnetic storage layer and/or into its interface to the ferromagnetic transfer layer. In another variant of the storing process, first the at least one anti-ferromagnetic storage layer is heated to a temperature higher than its Néel-temperature, and then the information is written into the ferromagnetic transfer layer in order to transfer the information into the anti-ferromagnetic storage layer and/or into its interface to the ferromagnetic transfer layer.
   Both variants are generally possible, and it depends on the specific application or device, which one is preferred.
   In a further variant of the storing process, the anti-ferromagnetic storage layer is heated as a whole to a temperature higher than its Néel-temperature. In another variant of the storing process, the anti-ferromagnetic storage layer is heated only locally and temporarily to a temperature higher than its Néel-temperature at the respective location where the information is actually to be transferred into the anti-ferromagnetic storage layer and/or into its interface to the ferromagnetic transfer layer. The temperature is then lowered below the Néel-temperature at this location again so as to permanently store the information at this location in the anti-ferromagnetic storage layer and/or in its interface to the ferromagnetic transfer layer.
   Again, both variants are generally possible. It depends on the specific application or device, which one is preferred.
   According to a further variant of the storing process, a magnetic multi-layer storage device is used comprising a single layer as the ferromagnetic transfer layer, while according to another variant a magnetic multi-layer storage device is used comprising a multi-layer system as the ferromagnetic transfer layer. Again, which embodiment of storage device is preferred depends on the specific application or on other requirements.
   Similarly, according to a further variant of the storing process a magnetic multi-layer storage device is used comprising a single layer as the anti-ferromagnetic storage layer, while according to another variant a magnetic multi-layer storage device is used comprising a multi-layer system as the anti-ferromagnetic storage layer.
   In still a further variant of the storing process one bit of the information is stored in a predefined area of the anti-ferromagnetic storage layer and/or in its interface to the ferromagnetic transfer layer by transferring a sequence of alternatingly magnetized sub-areas of the ferromagnetic transfer layer into the predefined area of the anti-ferromagnetic storage layer and/or of its interface to the ferromagnetic transfer layer, the alternating magnetization of the sub-areas being chosen such that - viewed over the whole sequence - the sequence exhibits a net magnetic field strength in one of the directions of magnetization, with the net magnetic field strength representing the bit.
   This is advantageous with respect to reading sensors with low sensitivity and/or with respect to large distances between reading sensor and the magnetic multi-layer storage device. Also, it has not yet been shown that an anti-ferromagnetic layer can be magnetized homogenously in a large area (of e.g. several micrometers). Accordingly, the magnetization of the afore-mentioned sequence of alternatingly magnetized (smaller) sub-areas is transferred into the anti-ferromagnetic storage layer and/or into its interface to the ferromagnetic transfer layer, and nevertheless the information is stored, since a net magnetic field strength representing the bit is transferred into the anti-ferromagnetic storage layer and/or into its interface to the ferromagnetic transfer layer. This sequence can later on be re-transferred into the ferromagnetic transfer layer, and the net magnetic field strength of a predefined area in the ferromagnetic transfer layer can then be detected so as to identify the value of the bit.
   Still in a further variant of the storing process a magnetic multi-layer storage device is used having a ferromagnetic transfer layer that is patterned. While the problem of low sensitivity of the reader or the large distance between reading sensor and magnetic multi-layer storage device can be overcome as described above, the writing of such small structures (sub-areas) would require a writing head that is able to magnetize sufficiently small magnetic structures. That is to say, the distance between writing head and magnetic multi-layer storage device must be sufficiently small. This may present a problem. However, this problem can be overcome by providing a patterned ferromagnetic transfer layer (e.g. a pattern that has magnetizable sub-areas which can be magnetized and that has small areas between these magnetizable sub-areas that are not magnetizable; for representation of one single bit the magnetizable sub-areas within one bit can then all be magnetized in the same direction, while the small areas between these magnetizable sub-areas remain not magnetized). If such patterned ferromagnetic transfer layer is magnetized, the definition (sub-areas/bit) is given by the number and the dimension of the magnetizable sub-areas within an area corresponding to one bit, however, it is possible to use a writing head with low definition for creating a magnetization pattern with a higher definition.
   Another aspect of the instant invention is related to a process for reading information stored in the anti-ferromagnetic storage layer and/or in its interface to the ferromagnetic transfer layer after the information has been deleted from the ferromagnetic transfer layer by driving the ferromagnetic transfer layer into (magnetic) saturation. While it is advantageous with respect to unauthorized reading and copying of information that the information cannot be read with conventional sensors, the information should be retrievable from the anti-ferromagnetic layer and/or from its interface to the ferromagnetic transfer layer where it is stored. With respect to this, the reading process according to the instant invention comprises the steps of
- applying a magnetic field having a field strength smaller than the coercive field strength of the ferromagnetic transfer layer and having a direction opposite to the direction of the magnetic field that has driven the ferromagnetic layer into saturation in order to restore the information from the anti-ferromagnetic storage layer and/or from its interface to the ferromagnetic transfer layer into the ferromagnetic transfer layer, and
- reading the information restored into the ferromagnetic layer with a reader.
   By applying a magnetic recovery field having a direction opposite to the direction of the magnetic field that has driven the ferromagnetic transfer layer into saturation, those areas in the ferromagnetic transfer layer that have been magnetized during the information transfer process in the same direction as the now applied recovery field will easily flip back to their original direction of magnetization, since the anti-ferromagnetic layer and/or its interface to the ferromagnetic transfer layer - despite the driving into saturation of the ferromagnetic layer - has stored the magnetization orientation (i.e. the information). Accordingly, application of a comparatively weak magnetic field having a direction opposite to the field that effected the saturation of the ferromagnetic transfer layer suffices to re-transfer the original information from the anti-ferromagnetic storage layer and/or from its interface to the ferromagnetic transfer layer to the ferromagnetic transfer layer. In contrast, those areas in the ferromagnetic transfer layer that have been magnetized during the information transfer process in the same direction as the field that effects the saturation, do not change their direction.
   Thus, the information that has been stored in the anti-ferromagnetic storage layer and/or in its interface to the ferromagnetic transfer layer, and which has then been deleted from the ferromagnetic transfer layer, can be restored to the ferromagnetic transfer layer and can then be read using a conventional reading sensor.
   In a variant of the reading process, a Hall-sensor is used for reading the information restored in the ferromagnetic transfer layer by moving the Hall-sensor along the ferromagnetic transfer layer.
   A further aspect of the instant invention is related to a process for changing or deleting information stored in a magnetic multi-layer storage device in the manner described above, in which the ferromagnetic transfer layer has been driven into saturation after completion of the transfer of the information into the anti-ferromagnetic storage layer and/or into its interface to the ferromagnetic transfer layer. This process comprises the steps of
- heating the at least one anti-ferromagnetic storage layer to a temperature higher than its Néel-temperature but lower than the Curie-temperature of the at least one ferromagnetic transfer layer either in order to transfer new information or no information from the ferromagnetic transfer layer into the anti-ferromagnetic storage layer and/or into its interface to the ferromagnetic transfer layer so as to change or delete the information stored in the anti-ferromagnetic layer and/or into its interface to the ferromagnetic transfer layer,
- subsequently lowering the temperature of the at least one anti-ferromagnetic storage layer below its Néel-temperature in order to permanently store the new information or no information in the anti-ferromagnetic storage layer and/or into its interface to the ferromagnetic transfer layer, and
- in case of new information having been stored in the anti-ferromagnetic storage layer and/or into its interface to the ferromagnetic transfer layer, deleting the new information from the ferromagnetic transfer layer.

In essence, this process corresponds to the process of storing information in the anti-ferromagnetic storage layer and/or into its interface to the ferromagnetic transfer layer, however, instead of storing information it is also possible to not store any information (that is to say to store "no information") into the anti-ferromagnetic storage layer and/or into its interface to the ferromagnetic transfer layer.

The variants of this process correspond essentially to the variants of the storing process described above.

In particular, the step of deleting of the new information from the ferromagnetic transfer layer comprises applying a magnetic field to the ferromagnetic transfer layer that drives the ferromagnetic transfer layer into saturation.

In accordance with a further variant, in order to transfer new information into or in order to delete stored information from the anti-ferromagnetic storage layer and/or into/from its interface to the ferromagnetic transfer layer, first the new information or no information is written into the ferromagnetic transfer layer, and only then the at least one anti-ferromagnetic storage layer is heated to a temperature higher than its Néel-temperature in order to transfer the new information or no information into the anti-ferromagnetic storage layer and/or into its interface to the ferromagnetic transfer layer. Alternatively, in order to transfer new information into or in order to delete stored information from the anti-ferromagnetic storage layer and/or into/from its interface to the ferromagnetic transfer layer, the at least one anti-ferromagnetic storage layer is heated to a temperature higher than its Néel-temperature, and then the new information or no information is written into the ferromagnetic transfer layer in order to transfer the information or no information into the anti-ferromagnetic storage layer and/or into its interface to the ferromagnetic transfer layer.

According to a further variant, the anti-ferromagnetic storage layer is heated as a whole to a temperature higher than its Néel-temperature. In the alternative, the anti-ferromagnetic storage layer may be heated only locally and temporarily to a temperature higher than its Néel-temperature at the respective location where the new information or no information is actually to be transferred into the anti-ferromagnetic storage layer and/or into its interface to the ferromagnetic transfer layer. The temperature is then lowered below the Néel-temperature at this location again so as to permanently store the new information or no information at this location in the anti-ferromagnetic storage layer and/or in its interface to the ferromagnetic transfer layer.

Also, a magnetic multi-layer storage device may be used comprising a single layer as the ferromagnetic transfer layer, or a magnetic multi-layer storage device may be used comprising a multi-layer system as the ferromagnetic transfer layer.

Similarly, a magnetic multi-layer storage device may be used comprising a single layer as the anti-ferromagnetic storage layer, or alternatively a magnetic multi-layer storage device may be used comprising a multi-layer system as the anti-ferromagnetic storage layer.

In a further variant of the process, one bit of the new information or of no information is stored in a predefined area of the anti-ferromagnetic storage layer and/or of its interface to the ferromagnetic transfer layer by transferring a sequence of alternatingly magnetized sub-areas of the ferromagnetic transfer layer into the predefined area of the anti-ferromagnetic storage layer and/or of its interface to the ferromagnetic transfer layer. The alternating magnetization of the sub-areas is chosen such that - viewed over the whole sequence - the sequence exhibits a net magnetic field strength in one of the directions of magnetization, with the net magnetic field strength representing the bit.

In a further variant of the process, a magnetic multi-layer storage device may be used having a ferromagnetic transfer layer that is patterned.

Finally, a further aspect of the instant invention is related to a multi-layer magnetic storage device comprising at least one ferromagnetic transfer layer and at least one anti-ferromagnetic storage layer containing stored information or no information, wherein the information or no information has been stored in the anti-ferromagnetic storage layer and/or in its interface to the ferromagnetic transfer layer by using any of the afore-described variants of the storing process or of the changing or deleting process.

Further aspects of the invention will become apparent by the following description of embodiments of the invention with the aid of the drawings, in which
- Fig. 1: shows an embodiment of a multi-layer magnetic storage device in accordance with the invention,
- Fig. 2: shows a further embodiment of a multi-layer magnetic storage device in accordance with the invention,
- Figs. 3A-3B: show still a further embodiment of a multi-layer magnetic storage device in accordance with the invention,
- Fig. 4: shows various embodiments of the ferromagnetic transfer layer of the multi-layer magnetic storage device according to the invention,
- Fig. 5: shows various embodiments of the anti-ferromagnetic storage layer of the multi-layer magnetic storage device according to the invention,
- Figs. 6A-6C: show a first variant of the storing process according to the invention,
- Figs. 7A-7C: show a second variant of the storing process according to the invention,
- Figs. 8A-8B: show a first variant of the reading process according to the invention,
- Figs. 9A-9B: show a second variant of the reading process according to the invention,
- Fig. 10A: shows an embodiment of a single bit having a value of one, that has been written into the ferromagnetic transfer layer,
- Fig. 10B: shows an embodiment of a single bit having a value of zero, that has been written into the ferromagnetic transfer layer,
- Fig. 11: shows a sequence of three bits in accordance with Figs. 10A-10B, that have been written into the ferromagnetic transfer layer,
- and:
- Fig. 12: shows a representation of two bits, one having a value of one and the other having a value of zero, that have been written into a patterned ferromagnetic transfer layer.

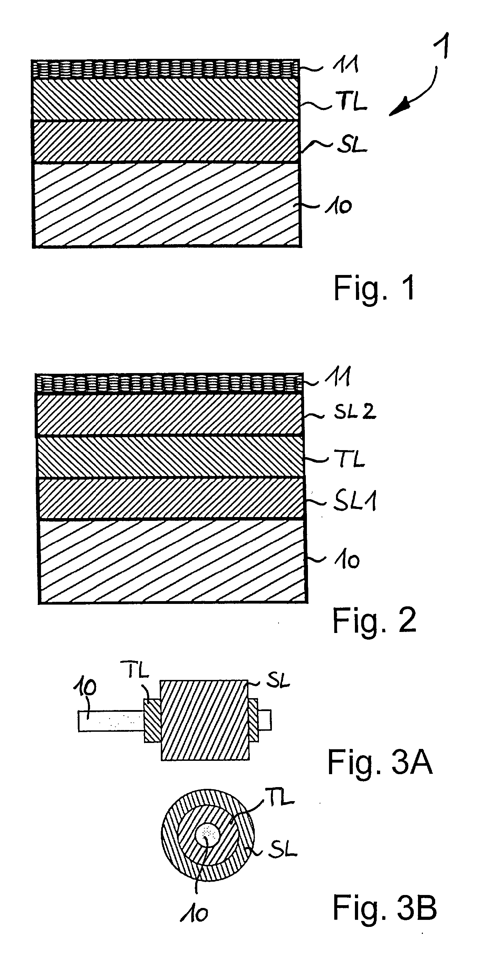

In **Fig. 1** a first (planar) embodiment of a magnetic multi-layer storage device according to the instant invention is shown. This embodiment of the magnetic multi-layer device 1 comprises a substrate 10, a protective layer 11, a ferromagnetic transfer layer TL and an anti-ferromagnetic storage layer SL.

In **Fig. 2** there is shown a further (planar) embodiment of a magnetic multi-layer storage device according to the instant invention. This embodiment comprises again a substrate 10 and a protective layer 11. Also, it comprises a ferromagnetic transfer layer TL, however, in contrast to the embodiment of Fig. 1, the embodiment shown in Fig. 2 comprises two antiferroamgnetic storage layers SL1 and SL2.

**Fig. 3** shows still a further embodiment of the magnetic multi-layer storage device according to the invention. In contrast to the two embodiments shown in Figs. 1 and 2, the embodiment of Fig. 3 is a radially symmetric arrangement of layers. Accordingly, substrate 10 is surrounded by a ferromagnetic transfer layer TL, which itself is surrounded by an anti-ferromagnetic storage layer SL.

The embodiments of Figs. 1 to 3 are shown by way of example only, just in order to show that various geometric arrangements of the layers are possible. The actual arrangement of layers can be tailored to the respective application in which the device is to be used.

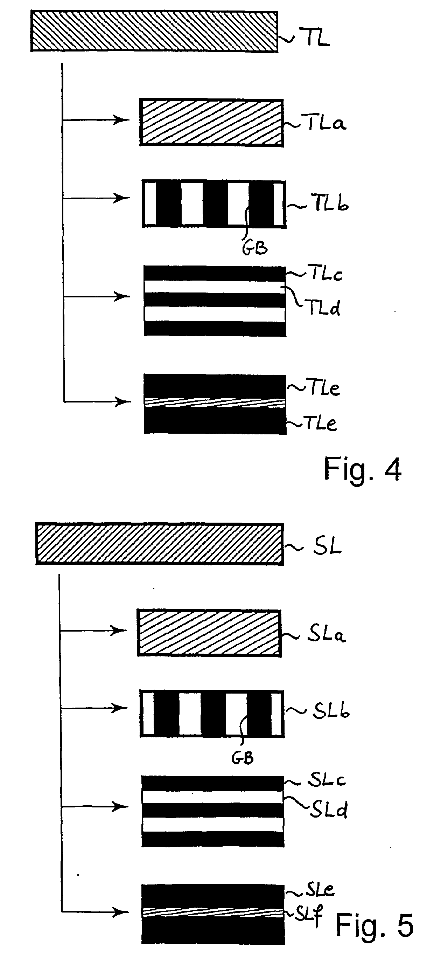

**Fig. 4** shows various possibilities how the ferromagnetic transfer layer TL can be embodied. It may be embodied, for example, as a single layer TLa of a material such as cobalt or a cobalt-chromium-tantalum-alloy. According to a further example, ferromagnetic transfer layer TL can be embodied as a layer TLb, the morphology is chosen such, that layer TL has specifically tailored grain boundaries GB. The grains can be ferromagnetic but can otherwise be magnetically decoupled. This can be achieved, for example, by an admixture of non-ferromagnetic materials and by segregation of the non-ferromagnetic materials to the grain boundaries GB. Further, ferromagnetic transfer layer TL can be embodied as a multi-layer system comprising several layers TLc and TLd of e.g. Cobalt or Platinum. In a further example, ferromagnetic transfer layer may be composed of two anti-ferromagnetically coupled ferromagnetic layers TLe (such as, for example, cobalt-ruthenium-cobalt).

Similarly, **Fig. 5** shows various possibilities how the anti-ferromagnetic storage layer SL can be embodied. It may be embodied, for example, as a single layer SLa of a material such as cobaltoxide (CoO), nickeloxide (NiO), FeMn, IrMn, PtMn, PtₓMn_{y}, FeCl₂ or any other suitable anti-ferromagnetic material. According to a further example, anti-ferromagnetic storage layer SL can be embodied as a layer SLb, the morphology is chosen such, that layer SL has specifically tailored grain boundaries GB (see also above with respect to ferromagnetic materials). Further, anti-ferromagnetic storage layer SL can be embodied as a multi-layer system comprising several anti-ferromagnetic layers SLc and SLd of e.g. Cobalt or Platinum. In a further example, anti-ferromagnetic storage layer may be composed of two ferromagnetic layers SLe separated by a non-magnetic spacer layer SLf.

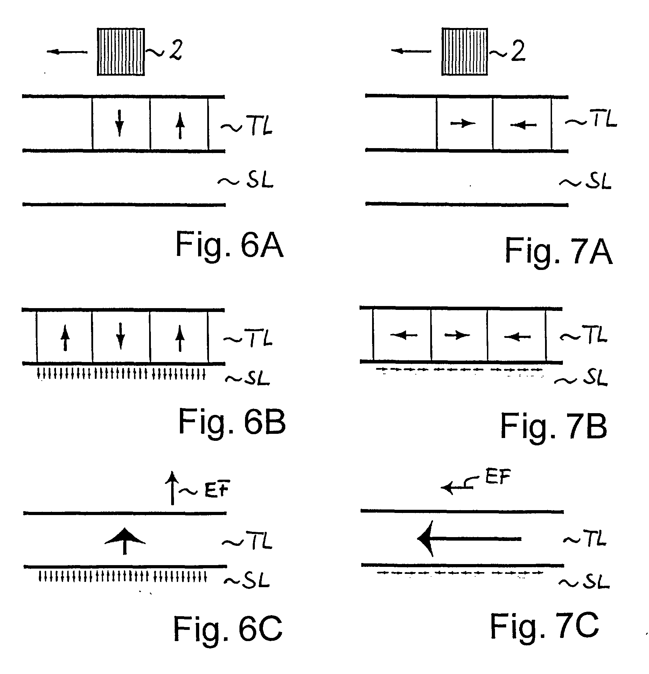

In **Figs. 6A-6C and Figs. 7A-7C** the general principle of the process of storing information according to the instant invention is shown in two variants. In **Fig. 6A** a writing head 2 is arranged above ferromagnetic transfer layer TL of a magnetic multi-layer storage device. Ferromagnetic transfer layer TL itself is arranged directly adjacent to anti-ferromagnetic storage layer SL. For the sake of better understanding let us assume, that at the very beginning of the writing process neither ferromagnetic transfer layer TL nor anti-ferromagnetic storage layer SL contains any information. When writing head 2 is moved across ferromagnetic transfer layer TL, it magnetizes a number of areas within ferromagnetic transfer layer by applying a magnetic field to the respective area of ferromagnetic transfer layer TL, so that one area is magnetized either in upward or downward direction (perpendicular anisotropy). Two such already magnetized areas are represented in Fig. 6A.

In a second step, as shown in **Fig. 6B**, the information is transferred from ferromagnetic transfer layer TL to anti-ferromagnetic storage layer SL. In order to achieve this, anti-ferromagnetic storage layer SL must have a temperature higher than its Néel-temperature. It is possible to heat anti-ferromagnetic storage layer SL to a temperature higher than its Néel-temperature prior to writing information into ferromagnetic transfer layer TL. Alternatively, the information may first be written into ferromagnetic transfer layer TL and only then anti-ferromagnetic storage layer SL is heated to a temperature higher than its Néel-temperature. Of course, the temperature to which anti-ferromagnetic storage layer SL is heated must be lower than the Curie-temperature of ferromagnetic transfer layer TL, otherwise ferromagnetic transfer layer and its magnetization may be deleted.

It is to be noted, that it is either possible to heat only anti-ferromagnetic storage layer SL or several layers of the magnetic multi-layer transfer device or the device as a whole to a temperature higher than the Néel-temperature of anti-ferromagnetic storage layer SL. However, in the latter two cases the materials of the remaining layers of the magnetic multi-layer storage device (protective layer, substrate) must be selected such that they are not adversely affected by the application of heat.

Also, it is possible to heat the respective layer or layers as a whole, while it is also an option to only locally and temporarily heat the respective layer or layers to a temperature higher than the Néel-temperature of anti-ferromagnetic storage layer SL at the location where the information is actually to be transferred from ferromagnetic transfer layer TL into anti-ferromagnetic storage layer SL. For the local and temporary heating it may be possible, for example, to use a laser or other suitable source of heat.

The magnetization of ferromagnetic transfer layer TL causes a respective pattern of uncompensated spins (small arrows in Fig. 6B) in anti-ferromagnetic storage layer SL. When the temperature of anti-ferromagnetic storage layer SL is subsequently decreased below its Néel-temperature, the pattern is imprinted from the ferromagnetic transfer layer TL into the anti-ferromagnetic storage layer SL. As long as the temperature stays below the Néel-temperature, the pattern remains permanently stored in anti-ferromagnetic storage layer SL.

After that, the information is deleted from ferromagnetic transfer layer TL. This can be done by applying a strong external magnetic field EF which drives ferromagnetic transfer layer TL into saturation and thus magnetizes the whole ferromagnetic transfer layer equally in one direction, as this is shown in **Fig. 6C**. The ferromagnetic transfer layer then does no longer contain any information, so that information can no longer be read with the aid of a conventional reader or an easy to construct reader. Accordingly, neither unauthorized reading nor unauthorized copying of information is possible any more. Nevertheless, despite the application of the strong external magnetic field EF and despite the unidirectional magnetization of ferromagnetic transfer layer TL, the information remains permanently stored in anti-ferromagnetic storage layer SL.

**Figs. 7A-7C** show another variant of the process, which differs only in that instead of a vertical orientation of the magnetization, the magnetization is effected horizontally. However, the general principles apply as they have been explained above with respect to Figs. 6A-6C.

While it is advantageous, that the information can no longer be easily read or copied without authorization, and while in addition the information so stored is no longer prone to external magnetic fields, it must be possible to read the information with authorization. Also, depending on the respective application, it may also be desirable that the information be changed or deleted.

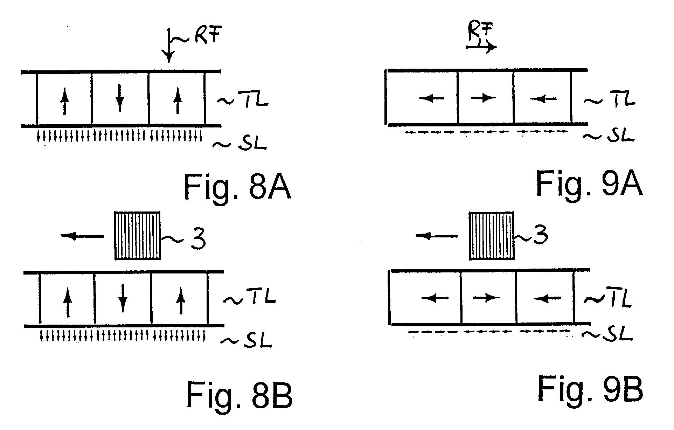

**Figs. 8A-8B** as well as Figs. **9A-9B** show two embodiments of the process of reading the information stored in anti-ferromagnetic storage layer SL in accordance with the instant invention. While the magnetic field of the uncompensated spins in anti-ferromagnetic storage layer is too weak to be read by a conventional reader, it is possible to restore the information from anti-ferromagnetic storage layer SL into ferromagnetic transfer layer TL.

For the sake of better understanding, let us assume that the magnetic multi-layer storage device is in a state as shown in Fig. 6C, that is to say ferromagnetic transfer layer TL has been driven into saturation by application of external magnetic field EF after the information has been stored in anti-ferromagnetic storage layer SL.

In order to restore the information from anti-ferromagnetic storage layer SL into ferromagnetic transfer layer TL, a magnetic recovery field RF is applied. This recovery field RF has a direction opposite to the direction of the external magnetic field EF that has driven ferromagnetic transfer layer TL into saturation (see Fig. 6C). Recovery field RF has a field strength smaller than the coercive field strength of ferromagnetic transfer layer TL. However, since in those areas where the uncompensated spins in anti-ferromagnetic storage layer SL are oriented such that they correspond to the direction of recovery field RF, the magnetization of ferromagnetic transfer layer TL changes its direction considerably easier than in an area where the uncompensated spins in anti-ferromagnetic storage layer SL are oriented in the opposite direction.

This phenomenon is illustrated in **Fig. 8A**, where the magnetization of the central area of the three areas of ferromagnetic transfer layer TL shown has already changed its orientation in accordance with the uncompensated spins in anti-ferromagnetic storage layer SL, whereas in the left hand area as well as in the right hand area of ferromagnetic transfer layer TL the magnetization has not changed due to the fact, that the uncompensated spins in anti-ferromagnetic storage layer SL are oppositely oriented. By this measure, it is possible to restore the information pattern stored in anti-ferromagnetic storage layer SL back into ferromagnetic transfer layer TL (of course, it is possible to use an anti-ferromagnetic material in which the uncompensated spins are oriented in a direction opposite to that shown in Figs. 8A-8B and 9A-9B).

Having completed the restoring step, it is possible to read the information from ferromagnetic transfer layer TL with a conventional reading head 3 which is moved along ferromagnetic transfer layer TL, as this is shown in **Fig. 8B.** The variant of the reading process according to **Fig. 9A** and **Fig. 9B** essentially differs from that one shown in Fig. 8A and Fig. 8B in that the orientation of the magnetization and of the uncompensated spins is horizontal rather than perpendicular. However, the general working principle is the same as that explained above with the aid of Fig. 8A and Fig. 8B.

Available reading sensors (such as they are contained in reading head 3, see Figs. 8B,9B) often have only a limited sensitivity and are also often arranged at comparatively large distances from the magnetic multi-layer storage device (so as not to accidentally contact the storage device). However, as a consequence this requires a sufficiently large size of the single bits of the information. On the other hand, anti-ferromagnetic materials of which a large area (several square micrometers) can be homogeneously "magnetized" have not yet been reported. However, areas of that size are needed in order to "reconstruct" a large homogeneously magnetized area in ferromagnetic transfer layer TL. In order to overcome this problem, each predefined area of ferromagnetic transfer layer TL that represents one bit is subdivided into a number of sub-areas, which are alternatingly magnetized. Accordingly, one single bit corresponds to a sequence of alternatingly magnetized sub-areas.

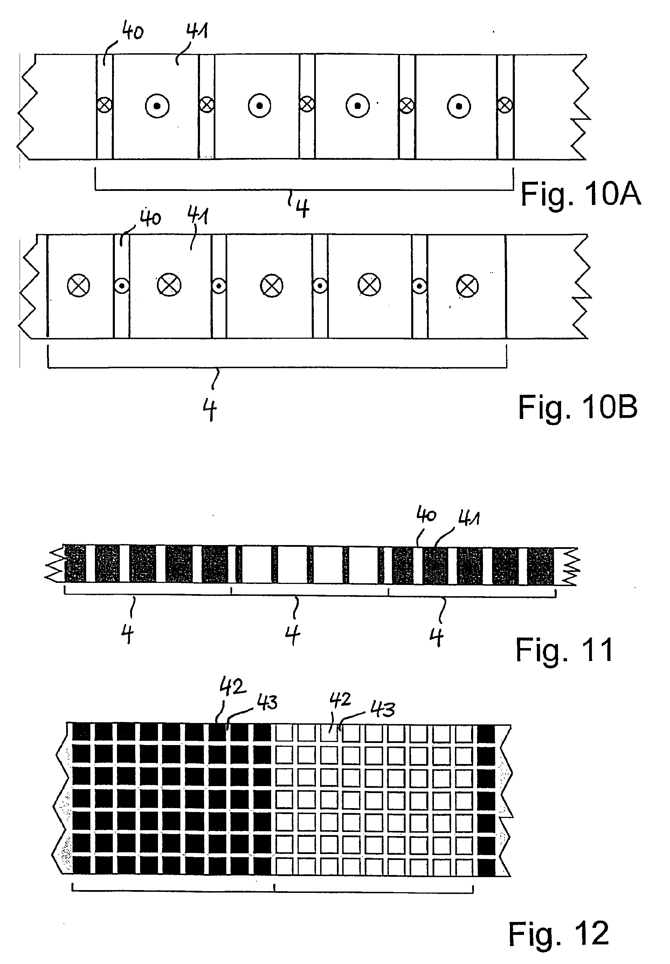

This is illustrated in **Fig. 10A** and **Fig. 10B,** respectively. While the respective areas 4 representing one bit are shown in these two figures as being of different size, this is for illustration purposes only. Usually the bits are of the same size. The direction of magnetization is alternating in the small sub-areas 40 and 41, respectively. This is illustrated by a crossed circle or a circle having a dot at its center, representing a direction of magnetization into and out of the drawing plane, respectively. The different sizes of the sub-areas 40 and 41 and their magnetization result in a net magnetic field strength which represents the bit (or its value, respectively). Accordingly, the net magnetic field strength of the bit shown in **Fig. 10A** represents a bit having a value of one, while the net magnetic field strength of the bit shown in **Fig. 10B** represents a bit having a value of zero. **Fig. 11** shows a sequence of three bits, the area 4 at the left being magnetized to correspond to a bit having a value of zero, while the following bit (center bit) has a value of one and the next bit again having a value of zero.

While the above-described measure is suitable to overcome the problems encountered with the low sensitivity and/or large distance between reading sensor and magnetic multi-layer storage device, it is necessary to be able to write such structures (sequences of alternatingly magnetized sub-areas). However, this would require a writing head that is able to magnetize sufficiently small areas (having the size of the sub-areas 40 or 41, respectively). As a consequence, the distance between the writing head and the magnetic multi-layer storage device must be chosen very small, resulting in a higher risk of an accidental contact).

This problem can be solved by a patterned (structured) medium, as this is shown in **Fig. 12**. The medium (e.g. the ferromagnetic transfer layer TL) can be a structured medium that comprises first sub-areas 42 and second sub-areas 43 arranged between the first sub-areas 42 so as to provide a structured medium. While the left bit may have a value of zero, the next bit may then have a value of one. The number of domains/bit is then given by the number and dimension of the sub-areas 42 or 43, respectively, which are magnetized in the same direction.

While a reading process without contacting the magnetic storage device has been described, it is also conceivable to drag a reading head over the storage device in contact with the device. In this case, the protective layer must be sufficiently resistant or thick so as to protect the magnetic layers.

As already mentioned, the processes according to the instant invention may have an unlimited number of possible applications. By way of example only, a few applications will be discussed.

One example for an application are write-once applications such as they are used in cards for access control, for security features in stocks or securities or bank notes, for elements in anti-theft devices or genuineness certificates. Depending on the application, the ferromagnetic transfer layer / anti-ferromagnetic storage layer (fmTL/afSL) system can be deposited onto a suitable flat plane substrate. However, also a deposition on a wire as a substrate (see Figs. 3A,3B) may be possible. The preparation of the multi-layer system and the writing of information may be performed at the manufacturer's site. Having done this, the fmTL/afSL system may be embedded into the actual application device (e.g. the card or the stock paper). The material surrounding the fmTL/afSL system or even the material of the card or stock is chosen such that heating the system above the Néel-temperature of the anti-ferromagnetic storage layer causes a change that can be easily recognized or may destroy the whole application device (e.g. the card). An example for that may be a polymer layer that changes its color upon heating the anti-ferromagnetic storage layer to a temperature higher than its Néel-temperature. The once stored information can thus not be changed anymore. In a reading or authentication device, the magnetic information is read as described further above. In case of a magnetic strip or card, the information can be read using a suitable reading head. In case of a security feature or a genuineness certificate, the information can be read using a Hall-sensor which is guided manually along the wire. Alternatively, the Hall-sensor can be integrated into a machine having a suitable mechanism for moving the sensor along the wire.

A further example for an application is a multiple writing application, in which the information can be stored, changed and stored again, etc. In this case, the device allows for a repeated heating over the Néel-temperature of the anti-ferromagnetic storage layer without the device being adversely effected. However, as long as the temperature of the anti-ferromagnetic storage layer stays below its Néel-temperature, the data stored in this layer cannot be deleted or changed without authorization. Also, the data cannot be read using a conventional reading head, as has been outlined in detail above.

Another example for an application is the provision of a unique marking containing security information in a dedicated area of a storage medium. This "pre-writing" is non-erasable and is performed at the manufacturer's site. It can be applied to hard disks, magnetic tapes, etc. For example, the pre-written data can be used as a unique marker for a protection against copying of the data which are written into the storage medium by an authorized user of the medium.

## Claims

1. Process for storing information in a magnetic multi-layer storage device (1), the magnetic multi-layer storage device comprising at least one ferromagnetic transfer layer (TL) and at least one anti-ferromagnetic storage layer (SL), **characterized in that** information that has been written into the ferromagnetic transfer layer (TL) is transferred into the anti-ferromagnetic storage layer (SL) and/or into its interface to the ferromagnetic transfer layer (TL) by heating of the at least one anti-ferromagnetic storage layer (SL) to a temperature higher than its Néel-temperature but lower than the Curie-temperature of the at least one ferromagnetic transfer layer (TL) in order to transfer the information from the ferromagnetic transfer layer (TL) into the anti-ferromagnetic storage layer (SL) and/or into its interface to the ferromagnetic transfer layer (TL), subsequently lowering the temperature of the anti-ferromagnetic storage layer (SL) below its Néel-temperature in order to permanently store the information in the anti-ferromagnetic storage layer (SL) and/or in its interface to the ferromagnetic transfer layer (TL), and then deleting the information from the ferromagnetic transfer layer (TL).

2. Process according to claim 1, wherein the step of deleting of the information from the ferromagnetic transfer layer (TL) comprises applying a magnetic field (EF) to the ferromagnetic transfer layer (TL) that drives the ferromagnetic transfer layer (TL) into saturation.

3. Process according any one of the preceding claims, wherein first the information is written into the ferromagnetic transfer layer (TL) and/or into its interface to the ferromagnetic transfer layer (TL), and only then the at least one anti-ferromagnetic storage layer (SL) is heated to a temperature higher than its Néel-temperature in order to transfer the information into the anti-ferromagnetic storage layer (SL).

4. Process according to claim 1 or claim 2, wherein first the at least one anti-ferromagnetic storage layer (SL) is heated to a temperature higher than its Néel-temperature, and then the information is written into the ferromagnetic transfer layer (TL) and/or into its interface to the ferromagnetic transfer layer (TL) in order to transfer the information into the anti-ferromagnetic storage layer (SL) and/or into its interface to the ferromagnetic transfer layer (TL).

5. Process according to any one of the preceding claims, wherein the anti-ferromagnetic storage layer (SL) is heated as a whole to a temperature higher than its Néel-temperature.

6. Process according to any one of claims 1 to 4, wherein the anti-ferromagnetic storage layer (SL) is heated only locally and temporarily to a temperature higher than its Néel-temperature at the respective location where the information is actually to be transferred into the anti-ferromagnetic storage layer (SL) and is then lowered below the Néel-temperature at this location again so as to permanently store the information at this location in the anti-ferromagnetic storage layer (SL) and/or in its interface to the ferromagnetic transfer layer (TL).

7. Process according to any one of the preceding claims, wherein a magnetic multi-layer storage device (1) is used comprising a single layer (TLa) as the ferromagnetic transfer layer (TL).

8. Process according to any one of claims 1 to 6, wherein a magnetic multi-layer storage device (1) is used comprising a multi-layer system (TLc,TLd) as the ferromagnetic transfer layer (TL).

9. Process according to any one of the preceding claims, wherein a magnetic multi-layer storage device (1) is used comprising a single layer (SLa) as the anti-ferromagnetic storage layer (SL).

10. Process according to any one of claims 1 to 8, wherein a magnetic multi-layer storage device (1) is used comprising a multi-layer system (SLc,SLd) as the anti-ferromagnetic storage layer (SL).

11. Process according to any one of the preceding claims, wherein one bit of the information is stored in a predefined area (4) of the anti-ferromagnetic storage layer (TL) and/or of its interface to the ferromagnetic transfer layer (TL) by transferring a sequence of alternatingly magnetized sub-areas (40,41) of the ferromagnetic transfer layer (TL) into the predefined area (4) of the anti-ferromagnetic storage layer (SL) and/or of its interface to the ferromagnetic transfer layer (TL), the alternating magnetization of the sub-areas (40,41) being chosen such that - viewed over the whole sequence - the sequence exhibits a net magnetic field strength in one of the directions of magnetization, with the net magnetic field strength representing the bit.

12. Process according to any one of the preceding claims, wherein a magnetic multi-layer storage device is used having a ferromagnetic transfer layer (TL) that is patterned (42,43).

13. Process for reading information stored in a device (1) comprising at least one ferromagnetic transfer layer (TL) and at least one anti-ferromagnetic storage layer (SL), the information having been stored in the at least one anti-ferromagnetic storage layer (SL) and/or in its interface to the ferromagnetic transfer layer (TL) by heating the at least one anti-ferromagnetic storage layer (SL) to a temperature higher than its Néel-temperature so as to transfer information that has been written into the ferromagnetic transfer layer (TL) into the anti-ferromagnetic storage layer (SL) and/or into its interface to the ferromagnetic transfer layer (TL), and wherein subsequently the temperature of the anti-ferromagnetic storage layer (SL) has been lowered below the Néel-temperature so as to permanently store the information in the anti-ferromagnetic storage layer (SL) and/or in its interface to the ferromagnetic transfer layer (TL), and wherein finally the information has been deleted from the ferromagnetic transfer layer (TL) by applying a magnetic field (EF) to the ferromagnetic transfer layer (TL) that drives the ferromagnetic transfer layer (TL) into saturation, the reading process comprising the steps of
- applying a magnetic recovery field (RF) having a field strength smaller than the coercive field strength of the ferromagnetic transfer layer (TL) and having a direction opposite to the direction of the magnetic field (EF) that has driven the ferromagnetic layer into saturation in order to restore the information from the anti-ferromagnetic storage layer (SL) and/or from its interface to the ferromagnetic transfer layer (TL) into the ferromagnetic transfer layer (TL), and
- reading the information restored into the ferromagnetic layer (TL) with a reader (3).

14. Process according to claim 13, wherein a Hall-sensor is used for reading the information restored in the ferromagnetic transfer layer (TL) by moving the Hall-sensor along the ferromagnetic transfer layer (TL).

15. Process for changing or deleting information stored in a magnetic multi-layer storage device (1) comprising at least one ferromagnetic transfer layer (TL) and at least one anti-ferromagnetic storage layer (SL) containing stored information, the information having been stored in the anti-ferromagnetic storage layer (SL) and/or in its interface to the ferromagnetic transfer layer (TL) by heating the at least one anti-ferromagnetic storage layer (SL) to a temperature higher than its Néel-temperature so as to transfer information that has been written into the ferromagnetic transfer layer (TL) into the anti-ferromagnetic storage layer (SL) and/or into its interface to the ferromagnetic transfer layer (TL), and wherein subsequently the temperature of the at least one anti-ferromagnetic storage layer (SL) has been lowered below the Néel-temperature so as to permanently store the information in the anti-ferromagnetic storage layer (SL) and/or into its interface to the ferromagnetic transfer layer (TL), and wherein finally the information has been deleted from the ferromagnetic transfer layer (TL) by applying a magnetic field (EF) to the ferromagnetic transfer layer (TL) that drives the ferromagnetic transfer layer (TL) into saturation, the process comprising the steps of
- heating the at least one anti-ferromagnetic storage layer (SL) to a temperature higher than its Néel-temperature but lower than the Curie-temperature of the at least one ferromagnetic transfer layer (TL) either in order to transfer new information or no information from the ferromagnetic transfer layer (TL) and/or from its interface to the ferromagnetic transfer layer (TL) into the anti-ferromagnetic storage layer (SL) so as to change or delete the information stored in the anti-ferromagnetic storage layer (SL) and/or in its interface to the ferromagnetic transfer layer (TL),
- subsequently lowering the temperature of the at least one anti-ferromagnetic storage layer (SL) below its Néel-temperature in order to permanently store the new information or no information in the anti-ferromagnetic storage layer (SL) and/or in its interface to the ferromagnetic transfer layer (TL), and
- in case of new information having been stored in the anti-ferromagnetic storage layer (SL) and/or in its interface to the ferromagnetic transfer layer (TL), deleting the new information from the ferromagnetic transfer layer (TL).

16. Process according to claim 15, wherein the step of deleting of the new information from the ferromagnetic transfer layer (TL) comprises applying a magnetic field (EF) to the ferromagnetic transfer layer (TL) that drives the ferromagnetic transfer layer (TL) into saturation.

17. Process according any one of claims 15 or 16, wherein in order to transfer new information into or in order to delete stored information from the anti-ferromagnetic storage layer (SL) and/or into/from its interface to the ferromagnetic transfer layer (TL), first the new information or no information is written into the ferromagnetic transfer layer (TL) and/or into its interface to the ferromagnetic transfer layer (TL), and only then the at least one anti-ferromagnetic storage layer (SL) is heated to a temperature higher than its Néel-temperature in order to transfer the new information or no information into the anti-ferromagnetic storage layer (SL) and/or into its interface to the ferromagnetic transfer layer (TL).

18. Process according to any one of claims 15 or 16, wherein in order to transfer new information into or in order to delete stored information from the anti-ferromagnetic storage layer (SL) and/or into/from its interface to the ferromagnetic transfer layer (TL), the at least one anti-ferromagnetic storage layer (SL) is heated to a temperature higher than its Néel-temperature, and then the new information or no information is written into the ferromagnetic transfer layer (TL) and/or into its interface to the ferromagnetic transfer layer (TL) in order to transfer the information or no information into the anti-ferromagnetic storage layer (SL) and/or into its interface to the ferromagnetic transfer layer (TL).

19. Process according to any one of claims 15 to 18, wherein the anti-ferromagnetic storage layer (SL) is heated as a whole to a temperature higher than its Néel-temperature.

20. Process according to any one of claims 15 to 18, wherein the anti-ferromagnetic storage layer (SL) is heated only locally and temporarily to a temperature higher than its Néel-temperature at the respective location where the new information or no information is actually to be transferred into the anti-ferromagnetic storage layer (SL) and/or into its interface to the ferromagnetic transfer layer (TL), and wherein the temperature is then lowered below the Néel-temperature at this location again so as to permanently store the new information or no information at this location in the anti-ferromagnetic storage layer (SL) and/or in its interface to the ferromagnetic transfer layer (TL).

21. Process according to any one of claims 15 to 20, wherein a magnetic multi-layer storage device (1) is used comprising a single layer (TLa) as the ferromagnetic transfer layer (TL).

22. Process according to any one of claims 15 to 20, wherein a magnetic multi-layer storage device (1) is used comprising a multi-layer system (TLc,TLd) as the ferromagnetic transfer layer (TL).

23. Process according to any one of claims 15 to 22, wherein a magnetic multi-layer storage device (1) is used comprising a single layer (SLa) as the anti-ferromagnetic storage layer (SL).

24. Process according to any one of claims 15 to 22, wherein a magnetic multi-layer storage device (1) is used comprising a multi-layer system (SLc,SLd) as the anti-ferromagnetic storage layer.

25. Process according to any one of claims 15 to 24, wherein one bit of the new information or of no information is stored in a predefined area (4) of the anti-ferromagnetic storage layer (SL) and/or of its interface to the ferromagnetic transfer layer (TL) by transferring a sequence of alternatingly magnetized sub-areas (40,41) of the ferromagnetic transfer layer (TL) into the predefined area (4) of the anti-ferromagnetic storage layer (SL) and/or of its interface to the ferromagnetic transfer layer (TL), the alternating magnetization of the sub-areas (40,41) being chosen such that - viewed over the whole sequence - the sequence exhibits a net magnetic field strength in one of the directions of magnetization, with the net magnetic field strength representing the bit.

26. Process according to any one of claims 15 to 25, wherein a magnetic multi-layer storage device (1) is used having a ferromagnetic transfer layer (TL) that is patterned (42,43).

27. Multi-layer magnetic storage device, comprising at least one ferromagnetic transfer layer (TL) and at least one anti-ferromagnetic storage layer (SL) containing stored information or no information, wherein the information or no information has been stored in the anti-ferromagnetic storage layer (SL) and/or in its interface to the ferromagnetic transfer layer (TL) by using a process according to any one of claims 1 to 12 or any one of claims 15 to 26.
